# EUROPEAN PATENT SPECIFICATION

(11) **EP 0 670 868 B1**
(45) Date of publication and mention of the grant of the patent: **22.01.1997**
(21) Application number: 94905319.3
(22) Date of filing: 23.11.1993
(51) Int. Cl.: C09D 127/12, C08K 13/00, B05D 1/00

(54) **FLUORORUBBER COATING COMPOSITION**
FLUORKAUTSCHUK-BESCHICHTUNGSZUSAMMENSETZUNG
COMPOSITION DE REVETEMENT A BASE DE CAOUTCHOUC FLUORE

(30) Priority: 27.11.1992 JP 318168/92
(43) Date of publication of application: 13.09.1995
(73) Proprietor: MINNESOTA MINING AND MANUFACTURING COMPANY, St. Paul, Minnesota 55133-3427 (US)
(72) Inventor: FUKUSHI, Tatsuo, Woodbury, MN 55125 (US)
(74) Representative: VOSSIUS & PARTNER
(86) International application number: US9311420
(87) International publication number: WO9412580

(56) References cited:
- US-A- 3 656 530
- US-A- 4 960 918

## Description

This invention relates to a liquid coating composition containing fluoroelastomer. This composition is useful as a for coating for metallic gaskets used in automobiles.

Gaskets, such as cylinder gaskets for automobiles, are prepared by coating metallic substrates, such as stainless steel substrates, with a fluoroelastomer coating. Such gaskets are increasingly popular over gaskets made of asbestos. Japanese Unexamined Patent Publication No. 2248453 discloses a fluoroelastomer coating composition comprising a polyol, a quaternary ammonium or phosphonium salt vulcanization accelerator, an amine vulcanization agent, a solvent mixture of ketone and alcohol and a magnesium oxide acid acceptor. However, this composition exhibits poor adhesivity to substrates, and, as a result, requires the surface of the substrate to be coated with a primer before applying the fluoroelastomer coating composition. The use of the primer coating increases the time required to produce a coated article, complicates the preparation process and increases the cost of the coated article.

Japanese Examined Patent Publication No. 47-18,346 discloses a fluoroelastomer coating composition containing an aminosilane compound. The aminosilane is supposed to improve bonding between the coating and substrates, however, the composition tends to gel prior to use, and once applied to a substrate, the coating has low durability against the long-life coolants (LLC) and does not possess sufficient high initial adhesivity between the coating and the substrate--although enhanced bonding between the coating and the substrate is acquired after aging the coated substrate.

U.S. Patent No. 4,960,918 discloses an organic silicon compound which is the condensation product of ∝, w-bisaminopropylsiloxane and a cinnamaldehyde represented by the general formula PhCH=CHCHO. The compound is described as being a fluororubbers vulcanizing agent. However, such compounds are not believed to improve bonding between cured fluoroelastomer coatings and metallic surfaces.

U.S. Patent No. 2,942,019 discloses the reaction product between an aldehyde or ketone and an organosilicon compound containing an aminoalkylsilyl group, such as certain aminopolysiloxanes. The patent states that such compounds have various uses, including, for example, the use of trifunctional methylideneaminoalkylsiloxanes and substituted methylideneaminoalkylsiloxanes as thermosetting resins or as modifiers to thermosetting resins to improve their color stability. The patent further states that the methylideneaminoalkylalkoxysilanes may be mixed or equilibrated with silicone elastomers before curing to improve their properties (column 7, lines 5-21). However, the patent does not disclose that the compounds are useful as fluoroelastomer cure agents or that such compounds can enhance bonding between cured fluoroelastomers and metallic surfaces.

An urethane resin composition containing the reaction product of an amino silane compound and an aldehyde or ketone compound and an isocyanate compound is disclosed in German Patent Application No. DE3414877. The application does not disclose that the reaction product of an aminosilane and aldehyde or ketone is useful as a latent fluoroelastomer vulcanizing agent or bonding agent.

In one aspect, the invention provides a fluoroelastomer coating composition comprising an organic solvent solution of fluoroelastomer gum and a Schiff base. For the purposes of this invention, a "Schiff base" is the reaction product of an aminosilane compound, or preferably a partially hydrolyzed and polymerized aminosilane compound hereinafter referred to as "polyaminosiloxane compound", with aldehydes or ketones.

The proportions of components used in the compositions are set forth herein in parts by weight. Unless otherwise indicated, all amounts referred to are in parts by weight of the component per 100 parts by weight of the fluoroelastomer. For brevity, these units are abbreviated as "phr".

In a preferred embodiment, the fluoroelastomer coating composition comprises, per each 100 parts by weight of fluoroelastomer gum, 2 to 50 phr by weight of the Schiff base, 1 to 30 phr acid acceptor.

Most preferably, the coating composition further comprises other components commonly used to cure fluoroelastomers such as polyamines, polyols and peroxide vulcanization agents and those vulcanization accelerators (e.g., organoonium accelerators such as quaternary ammonium and phosphonium salts), co-agents and acid acceptors commonly employed with the aforementioned vulcanization agents.

The present invention also provides a method of making a fluoroelastomer coated article comprising the steps of: (A) applying the aforementioned fluoroelastomer coating composition to the inorganic (e.g., metal, glass or ceramic) surface of a substrate and (B) then heating the coated surface to 100 to 300°C, or, alternatively, irradiating the coated surface with ionizing radiation at a level of 0.1 to 20 Mrads until the desired level of cure of the coating is effected.

The fluoroelastomer coating composition of this invention possesses good shelf-stability and does not prematurely gel because the Schiff base will not react with the fluoroelastomer until the coated article is heated to a temperature adequate or irradiated sufficiently to decompose the Schiff base and liberate the aminosilane or polyaminosiloxane compounds.

Any aminosilane or polyaminosiloxane compound capable of enhancing the bonding between a fluoroelastomer and an inorganic surface, such as a metallic surface, is useful in the preparation of the Schiff base used in this invention. Many such compounds are known in the art. Typically, such compounds contain at least one amino group, and aminosilane compounds may be represented by the following formula:

H₂N-R₁-Si(OR₂)ₙ(R₃)₃₋ₙ (I)

Where, in the above formula,
R₁ can be selected from the group consisting of-R₄- and -R₅-NH-R₆, wherein R₄, R₅, and R₆ can be independently selected from the group consisting of linear and branched alkylene groups, preferably having 1 to 4 carbon atoms, and most preferably having 3 carbon atoms, wherein among the aforementioned alkylene groups, propylene is particularly preferred; R₂ and R₃ can be independently selected from the group consisting of hydrogen atoms and lower alkyl groups having 1 to 5 carbon atoms (e.g., methyl, ethyl, n-propyl, isopropyl, n-butyl, isobutyl, and tert-butyl groups), and preferably 2 carbon atoms; and n is an integer of 2 to 3.

Representative examples of the aminosilane compounds useful in this invention include:
3-aminopropyltrimethoxysilane,
3-aminopropyltriethoxysilane,
3-aminoisobutyltrimethoxysilane,
3-aminoisobutyltriethoxysilane,
N-2-aminoethyl-3-aminopropyltrimethoxysilane,
N-2-aminoethyl-3-aminopropyltriethoxysilane,
3-aminopropyldimethoxymethylsilane,
3-aminopropyldiethoxymethylsilane,
3-aminopropyldimethoxyethylsilane, and
3-aminopropyldiethoxyethylsilane.

Preferably, the alkoxy groups of the aminosilane compound are partially hydrolyzed and the aminosilane compound is partially polymerized by heating the aminosilane with an equimolar amount of water at a temperature between 40 and 100°C to yield a polyaminosiloxane product. To monitor the progress of the aforementioned reactions, gel permeation chromatography (to monitor the molecular weight of the reaction mixture) or infrared spectrophotometry (to measure the increasing concentration of hydroxyl groups in the reaction mixture) can be used. A more practical means of monitoring the progress of the reaction is simply to measure the viscosity of the reaction mixture. Typically, the initial viscosity of the reaction mixture is about 1 to 2 cps at 25°C, and after reaction, the reaction mixture will possess a viscosity of 3 to 10,000 cps, and preferably 5 and 1000 cps, at 25°C.

To the polyaminosiloxane, additional tetraalkoxysilane compounds may be added. The tetraalkoxysilane compounds may be reacted with water as described above prior to their addition to the polyaminosiloxane, or they may be hydrolyzed along with the aminosilane compound. Preferably, the alkyl group of the alkoxy moiety of the tetraalkoxysilane compound is a lower alkyl such as methyl or ethyl. The tetraalkoxysilane compounds may be added to the coating composition in ratios of 1:100 to 2:1 parts by weight tetraalkoxysilane compound to aminosilane or polyaminosiloxane compound. If a ratio greater than 2:1 used, the shelf life of the coating composition may be shortened. If a ratio smaller than 1:100 is used, the adhesion to the substrate will be poor.

The aldehyde or ketone compounds useful in the preparation of the Schiff base can represented by the following formula:

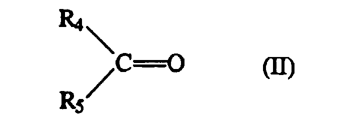

Where, in the above formula, R₄ and R₅ can be independently selected from the group consisting of hydrogen atoms, and linear or branched alkyl groups having 1 to 12 carbon atoms, aryl groups, and alkaryl groups (wherein the alkyl moiety that is part of the alkaryl group is a lower alkyl moiety having 1 to 5 carbon atoms, e.g., methyl, ethyl, n-propyl, isopropyl, n-butyl, isobutyl, tert-butyl, and linear or branched pentyl moieties), or R₄ and R₅ may together, with the carbon to which they are both bonded, form an unsubstituted or substituted alkylene group having 3 to 10, and preferably 6, carbon atoms, in which case the ketone will be a cycloalkanone and the aldehyde a cinnamaldehyde.

Representative examples of ketone or aldehyde compounds useful in this invention include methylethyl ketone, acetone, cyclohexanone, methylbutyl ketone, methylisobutyl ketone, acetophenone, ethylcyclohexanone, formaldehyde, acetaldehyde, propylaldehyde, butylaldehyde, and cinnamaldehyde.

The Schiff base is prepared by reacting the aminosilane or polyaminosiloxane compound with the desired aldehyde or ketone. In the reaction, the amino group of an aminosilane or polyaminosiloxane compound and the oxygen of the aldehyde or ketone are believed to undergo the following dehydration and condensation reaction:

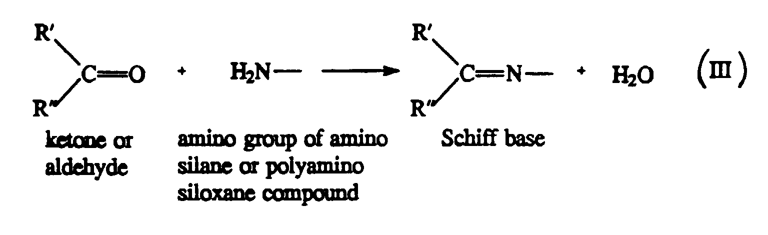

The reaction depicted above is accomplished by heating the reactants to 50 to 150°C for a period of 10 to 120 minutes in the presence of an entrainer capable of forming an azeotrope with water (e.g., cyclohexane or toluene). Thereby forming the Schiff base and removing the water from the reaction product. The reaction may be accelerated by use of a catalyst such as an acid catalyst (e.g., toluenesulfonic acid or benzenesulfonic acid).

Typically, the amount of the Schiff base added to the coating composition is 2 to 50 phr. When less than 2 phr of Schiff base is used in the composition, the coating is inadequately cross-linked and will not possess desirable physical properties, have adequate heat resistance or be adequately bonded to the substrate surface. If more than 50 phr of the Schiff base are used in the coating composition, the cured coating may be too hard.

Fluoroelastomers useful in the coating composition include any fluoroelastomers known in the art. Some of commercially available fluoroelastomers useful in the coating composition include copolymers of vinylidene fluoride and hexafluoropropylene, terpolymers of vinylidene fluoride, hexafluoropropylene and tetrafluoroethylene, copolymers of tetrafluoroethylene and propylene, and terpolymers of vinylidene fluoride, tetrafluoroethylene and propylene.

The coating compositions of the invention may further comprise acid acceptors and conventional vulcanizing agents and vulcanization accelerators known in the art (e.g., polyamine compounds, polyols, peroxide compounds and their conventional coagents or cocuratives, and organoonium vulcanization accelerators). The additional curatives permit the formulator to enhance the cure rate of the coating composition.

When an additional vulcanizing agent is employed in the coating composition, the rate of vulcanization can be controlled and accelerated more easily than when the Schiff base is used as the sole vulcanizing agent in the coating composition. Though the amount of the additional vulcanizing agent added to the coating composition may be varied depending upon the particular physical properties desired in the cured fluoroelastomer coating, generally, 0.5 to 10 phr of polyamine and polyol vulcanizing agent are employed because such levels provide good cure rates and coating composition shelf life. Generally, amounts of 0.1 to 10 phr of peroxide vulcanizing agent and 1 to 20 phr of cocurative or coagent are employed.

Representative examples of the polyamine vulcanizing agents include N,N'-dicinnamilydene-1,6-hexanediamine, hexamethylenediamine monocarbonate, and 4,4'-methylenebis(cyclohexylamine) carbamate.

Representative examples of polyols include 2,2-bis(4-hydroxyphenyl)propane, 2,2-bis(4-hydroxyphenyl)perfluoropropane, hydroquinone, catechol, resorcin, 4,4-dihydroxydiphenyl methane, 4,4-dihydroxydiphenyl sulfone, and 4,4-dihydroxydiphenyl mercaptan. The alkali metal salts and alkaline earth metal salts of such polyols are also useful.

Representative examples of peroxide vulcanization agents include organic or inorganic peroxides such as benzoyl peroxide, bis(2,4 dichlorobenzoyl)peroxide, dicumyl peroxide, t-butylhydroperoxide, di-t-butyl peroxide, t-butylperoxy benzoate, and lauroyl peroxide, 2,5-dimethyl-2,5-bis(t-butylperoxy)hexane, 1,1-bis(t-butyl)-3,3,5-trimethylcyclohexane and 2,5-dimethyl-2,5-bis(t-butylperoxy)hexyne-3. Preferably, a cocuring agent is used in conjunction with the peroxide vulcanization agent. Examples of cocuring agents include triallylcyanurate, diallylphthalate, allylmethacrylate and triallylisocyanurate.

The vulcanization accelerators mentioned above are known and include any capable of functioning in conjunction with vulcanizing agent such as a polyamine or polyol compound as a vulcanizing accelerator. For example, the accelerators include organo-onium compounds such as the phosphonium, ammonium and sulfonium compounds described in U.S. Patent Nos. 4,882,390, 4,233,421 and 5,086,123.

Typical phosphonium compounds include, for example, amino-phosphonium, phosphorane, and phosphorous-containing-iminium compounds. Some of the phosphonium and ammonium compounds particularly useful in this invention can be represented by the following general formula: 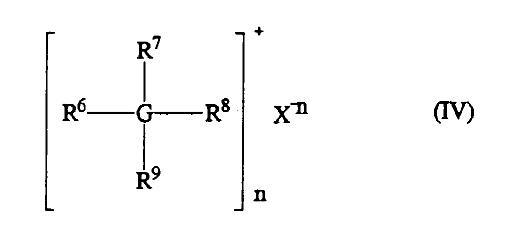 where, in the above formula, G is a phosphorous or nitrogen atom, X⁻ⁿ is an organic or inorganic anion such as halide, hydroxylate, alkoxylate, carboxylate, phenoxide, sulfonate, sulfate, sulfite, carbonate and nitrate, n is equal to the valence of the anion X and R⁶, R⁷, R⁸ and R⁹ are selected from the group of radicals consisting of alkyl, aryl, alkenyl or combinations thereof. R⁶, R⁷, R⁸ and R⁹ can be substituted with chlorine, fluorine, bromine, cyano, -OR¹⁶ and -COOR¹⁶ moieties where R¹⁶ is selected from the group consisting of C₁ to C₂₀ alkyl, aryl, aralkyl and alkenyl. Any pair of said R⁶⁻⁹ groups can be connected with each other and the nitrogen or phosphorus atom to form a heterocyclic ring.

Representative examples of useful organoonium compounds include tetraphenyl phosphonium chloride, tetraphenyl phosphonium bromide, tetraoctyl phosphonium chloride, tetra-n-butyl phosphonium chloride, tetraethyl phosphonium chloride, tetramethyl phosphonium chloride, tetramethyl phosphonium bromide, triphenylbenzyl phosphonium chloride, triphenylbenzyl phosphonium bromide, triphenylbenzyl phosphonium stearate, triphenylbenzyl phosphonium benzoate, triphenylisobutyl phosphonium bromide, trioctyl-n-butyl phosphonium chloride, trioctylbenzyl phosphonium chloride, trioctylbenzyl phosphonium acetate, triphenyl-2,4-dichlorobenzyl phosphonium chloride, trioctylmethoxyethoxyethyl phosphonium chloride, triphenylethoxycarbonylmethyl phosphonium chloride, triphenylallyl phosphonium chloride, 1-alkylpyridinium salts, 5-aralkyl-1,5-diaza-bicyclo[4,3,0]-5-nonenium salts, 8-aralkyl-1,8-diazabicyclo-[5,4,0]-7-undecenium salts, tetraphenyl ammonium chloride, tetraphenyl ammonium bromide, tetraoctyl ammonium chloride, tetra-n-butyl ammonium chloride, tetraethyl ammonium chloride, tetramethyl ammonium chloride, tetramethyl ammonium bromide, triphenylbenzyl ammonium chloride, triphenylbenzyl ammonium bromide, triphenylbenzyl ammonium stearate, triphenylbenzyl ammonium benzoate, triphenyl-isobutyl ammonium bromide, trioctyl-n-butyl ammonium chloride, trioctylbenzyl ammonium chloride, trioctylbenzyl ammonium acetate, triphenyl-2,4-dichlorobenzyl ammonium chloride, trioctyl methoxyethoxyethyl ammonium chloride, triphenyl ethoxycarbonyl methyl ammonium chloride, and triphenyl allyl ammonium chloride.

Preferably, vulcanization accelerators are used in in composition in amounts of 0.5 to 10 phr.

Acid acceptors useful in the invention can be any of the those compounds which are generally used in the vulcanization of fluoroelastomers. Examples of such compounds include divalent metal oxides and hydroxides, and they may be employed in the coating composition either singly or in mixtures of two or more acid acceptors. Representative examples of acid acceptors include magnesium oxide, calcium oxide, zinc oxide, lead oxide, and calcium hydroxide. Among aforementioned acid acceptors, magnesium oxide is particularly preferably because of its low activity. Typically, acid acceptor is added to the composition at a level of from 1 to 30 phr. If less than 1 phr of acid acceptor is used, vulcanization of the fluoroelastomer is slow, and if more than 30 phr of acid acceptor is used, the cured fluoroelastomer coating has poor water resistance.

The fluoroelastomer coating composition of the present invention can be produced by mixing the various components mentioned above with an organic solvent capable of dissolving the components of the mixture. Useful organic solvents include those selected from the group consisting of methyl isobutyl ketone, methylethyl ketone, ethyl acetate, cellosolve acetate, methanol, ethanol and isopropanol, and the solvents can be used singly or in mixtures of two or more. The organic solvent is used in such an amount that the resultant solution has a total solid content of from 10 to 90% by weight based on the total weight of the composition. The exact total solid content of the coating will depend on the coating method selected to apply the composition. This range is preferred because lower solids solutions will possess unduly low viscosities and cannot easily be applied to a metallic plate or the like and the resultant coating requires a long drying time. If the solid content is greater than 90%, the coating solution will possess an undesirably high viscosity and be difficult to uniformly apply to substrates.

Additional adjuvants and fillers commonly used in fluoroelastomer compositions may also be added to the coating composition. For example, fillers such as, for example, silica, clay, diatomaceous earth, talc, carbon black, carbon fibers, alumina fibers, glass fibers, and asbestos fibers may be added. Although the amount of filler to be added will depend upon the particular use and physical properties contemplated, amounts in the range of 5 to 200 phr, or preferably of 10 to 100 phr, may be used.

The coating composition of the present invention can be applied to a substrate surface by any conventional coating method, for example, spray coating, dip coating, flow coating and roll coating methods may be used. After coating the substrate, the coated substrate is heated to 100°C to 300°C, preferably 120°C to 250°C, and most preferably 120°C to 200°C, for about 15 minutes to 2 hours, and preferably for 30 to 60 minutes. The heating is believed to decompose the Schiff base and liberate the active aminosilane or aminopolysiloxane compound resulting in vulcanization of the coating and bonding of the coating to the substrate.

### Examples 1-7 and Comparative Examples C1-C3

The following procedure was utilized to synthesize the Schiff bases used in the subsequent examples.

Preparation of an aminosilane Schiff base. A three-neck flask equipped with a reflux tube was charged with 221.14 g (1.0 mol) of 3-aminopropyltriethoxysilane and 500 g of toluene. Dry nitrogen was bubbled through the liquid to displace entrapped air. To the flask, 132.16 g (1.0 mol) of cinnamaldehyde was added dropwise and the resulting mixture was stirred at a room temperature for 30 minutes. The temperature of the contents of the flask was then increased to 100 to 120°C and held there for two hours with stirring to remove the toluene. The remaining contents of the flask was then vacuum distilled to remove remaining volatile matter and obtain N-cinnamilydene-3-aminopropyl triethoxysilane (hereinafter referred to as "CAPS").

Preparation and evaluation of the fluoroelastomer coatina compositions. The exemplified fluoroelastomer compositions were prepared by compounding the following ingredients using a two-roll mill: 100 phr of fluoroelastomer (commercially available as FLUOREL fluoroelastomer FC-2145 from 3M), 30 phr of carbon black (commercially available as Thermal N-900 carbon black from Cancarb Ltd.), magnesium oxide (commercially available as "Kyowamag" #30 from Kyowa Kagaku K.K.) in the amount specified in Table 1, and N,N'-cinnamilydene-1,6-hexadiamine in the amount specified in Table-1 (commercially available as "Diak" #3 from DuPont DeNemours and Company).

To each of the compounded fluoroelastomer compositions described above, a solution of either the CAPS (described above) or 3-aminopropyl triethoxy silane (hereinafter referred to as "APS") was added. The solution was prepared by dissolving the CAPS or APS, in the amount specified in Table-1, in 300 g of methyl isobutyl ketone (MIBK) and then combining the resulting solution to the compounded fluoroelastomer compositions described above.

The fluoroelastomer coating composition thus obtained was applied using a bar coater to a stainless steel plate (SS-301) cleaned with 1,1,1-trichloroethylene. The coating was dried at a room temperature and then further dried at 120°C for 10 minutes to yield a coating of about 20 micrometers in thickness. The coating was then vulcanized at 200°C for 30 minutes.

To evaluate the adhesivity or bonding of the fluoroelastomer coating compositions, the coatings, immediately after the vulcanizing treatment and after immersion for 500 hours in LLC (available commercially from Toyota Motor Company as Genuine Long-Life Coolant-diluted to 50% by volume with water) at 120°C were subjected to a "Cross-Cut Adhesion" test and a "Pencil Hardness" test in accordance with the procedures set forth in Japanese Industrial Standard (JIS) K-5400. The results of this testing are presented in Table-1.

The stability of the fluoroelastomer coating compositions at normal room temperature were also evaluated. The number of days required for the coating compositions to gel are presented in Table-1.

In the "Pencil Hardness Test", a rating of "H" indicates the hardest possible coating, "HB" the next hardest coating, "B" the next hardest coating and "2B" the least hard coating. It is important to achieve coatings having an acceptable level of initial hardness. The acceptable level of hardness will vary depending upon the application, and initial hardnesses of HB to 2B may be acceptable. Perhaps even more important than initial coating hardness is whether the coating hardness changes over time as the coating is exposed to the environmental conditions normally encountered in use. Generally, large changes in the Pencil Hardness Test rating is undesirable.

In the Cross-Cut Adhesion Test, the vulcanized coating is scored or cut at regular intervals of 1.0 mm to form ten sections. A tape is then applied to the cut coating and removed. Any coating that does not adhere to the substrate is removed by the tape. The coating adhesion is then measured by counting the number of sections remaining bonded to the substrate. A rating of 10 indicates that no coating was lost after tape removal. While any loss of coating is undesirable, some loss of the coating, may not render a composition unacceptable.

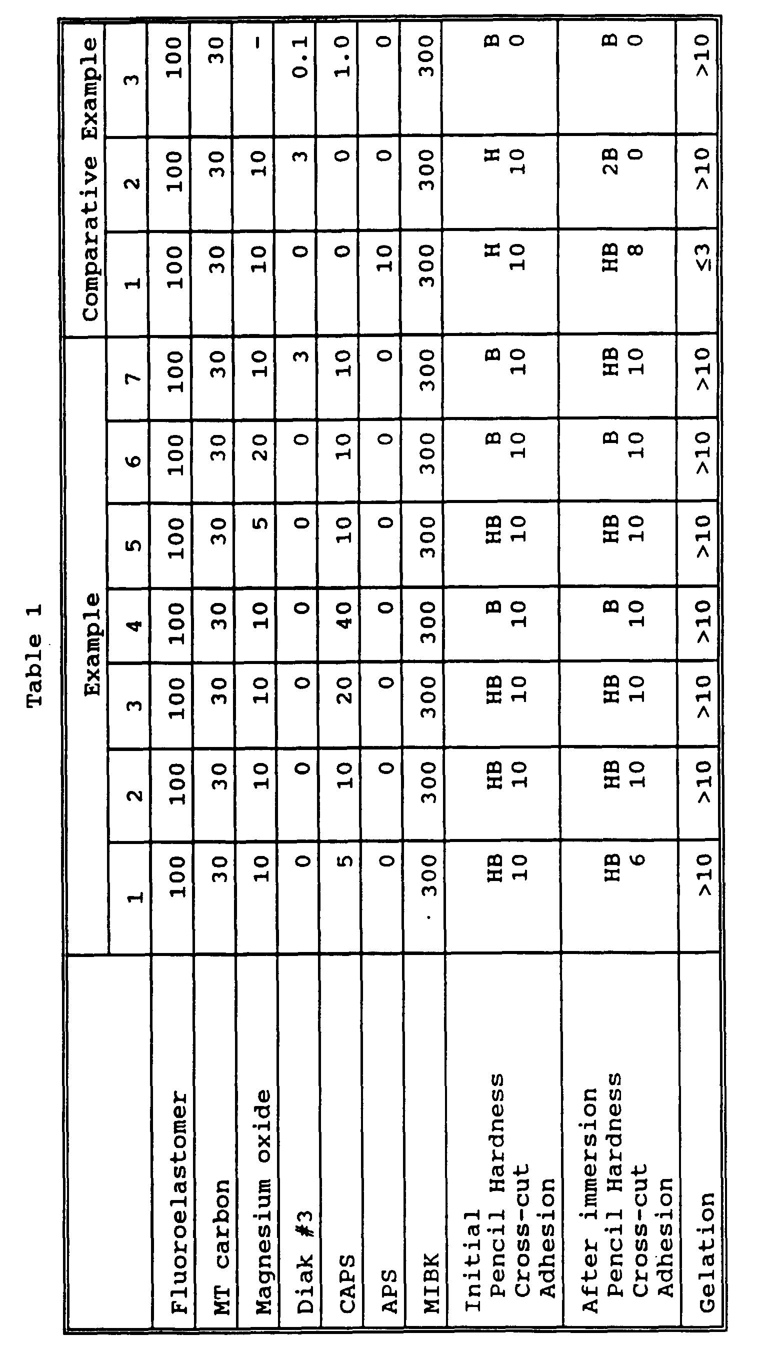

The data shows that the coatings of this invention have good pot life, good adhesion both before and after immersion in LLC and good hardness both before and after immersion in LLC.

## Claims

1. A fluoroelastomer coating composition, comprising for each 100 parts by weight of fluoroelastomer:
(A) 2 to 50 parts by weight of a Schiff base prepared by reacting an aminosilane or polyaminosiloxane compound with an aldehyde or ketone compound; and
(B) 1 to 30 parts by weight of an acid acceptor;
and such an amount of an organic solvent as to give the composition a total solid content of 10 to 90% based on the total weight of the composition.

2. A fluoroelastomer coating composition according to claim 1 wherein the composition further comprises an amine vulcanizing agent.

3. A fluoroelastomer coating composition according to claim 2 wherein the amine vulcanizing agent is present in the composition in an amount of 0.5 to 10 parts by weight per 100 parts by weight of the fluoroelastomer.

4. A fluoroelastomer coating composition according to claim 2 wherein the composition further comprises an organoonium vulcanization accelerator.

5. A fluoroelastomer coating composition according to claim 1 wherein the composition further comprises polyol and organoonium vulcanization accelerator.

6. A fluoroelastomer coating composition according to claim 5 wherein the polyol is present in the composition in an amount of 0.5 to 10 parts per 100 parts of fluoroelastomer and the organoonium compound is present in the composition in an amount from 0.5 to 10 parts per 100 parts of fluoroelastomer.

7. A fluoroelastomer coating composition according to claim 1 wherein the composition further comprises 0.1 to 10 parts by weight of peroxide vulcanizing agent per 100 parts by weight of fluoroelastomer and 1 to 20 parts by weight of coagent per 100 parts by weight of fluoroelastomer.

8. An article coated with the fluoroelastomer composition of claim 1.

9. A method of producing a coated article comprising the steps of:
(A) applying a coating of the fluoroelastomer coating composition of claim 1 to the surface of an inorganic substrate; and
(B) then heating the resultant coated article to a temperature in the range of from 100 to 300°C until the desired degree of cure of the coating is achieved.

10. A method of producing a coated article comprising the steps of:
(A) applying a coating of the fluoroelastomer composition of claim 1 to the surface of an inorganic substrate; and
(B) then irradiating the resultant coated substrate with radiation of sufficient intensity to effect a cure of the fluoroelastomer coating.

## Patentansprüche

1. Fluorelastomer-Beschichtungszusammensetzung, umfassend für jeweils 100 Gewichtsteile Fluorelastomer:
(A) 2 bis 50 Gewichtsteile einer Schiffschen Base, hergestellt durch Umsetzung einer Aminosilan- oder Polyaminosiloxanverbindung mit einer Aldehyd- oder Ketonverbindung; und
(B) 1 bis 30 Gewichtsteile eines Säureakzeptors und eine derartige Menge eines organischen Lösungsmittels, um einen Gesamtfeststoffgehalt der Zusammensetzung von 10 bis 90% auf der Grundlage des Gesamtgewichts der Zusammensetzung zu ergeben.

2. Fluorelastomer-Beschichtungszusammensetzung nach Anspruch 1, wobei die Zusammensetzung ferner ein Amin-Vulkanisationsmittel umfaßt.

3. Fluorelastomer-Beschichtungszusammensetzung nach Anspruch 2, wobei das Amin-Vulkanisationsmittel in der Zusammensetzung in einer Menge von 0,5 bis 10 Gewichtsteilen pro 100 Gewichtsteile des Fluorelastomers vorhanden ist.

4. Fluorelastomer-Beschichtungszusammensetzung nach Anspruch 2, wobei die Zusammensetzung ferner einen Organoonium-Vulkanisationsbeschleuniger umfaßt.

5. Fluorelastomer-Beschichtungszusammensetzung nach Anspruch 1, wobei die Zusammensetzung ferner ein Polyol und einen Organoonium-Vulkanisationsbeschleuniger umfaßt.

6. Fluorelastomer-Beschichtungszusammensetzung nach Anspruch 5, wobei das Polyol in der Zusammensetzung in einer Menge von 0,5 bis 10 Teilen pro 100 Teile Fluorelastomer vorhanden ist und die Organooniumverbindung in der Zusammensetzung in einer Menge von 0,5 bis 10 Teilen pro 100 Teile Fluorelastomer vorhanden ist.

7. Fluorelastomer-Beschichtungszusammensetzung nach Anspruch 1, wobei die Zusammensetzung ferner 0,1 bis 10 Gewichtsteile Peroxid-Vulkanisationsmittel pro 100 Gewichtsteile Fluorelastomer und 1 bis 20 Gewichtsteile Zusatzmittel pro 100 Gewichtsteile Fluorelastomer umfaßt.

8. Gegenstand, beschichtet mit der Fluorelastomer-Zusammensetzung nach Anspruch 1.

9. Verfahren zur Herstellung eines beschichteten Gegenstandes, umfassend die Schritte:
(A) Aufbringen einer Beschichtung der Fluorelastomer-Beschichtungszusammensetzung nach Anspruch 1 auf die Oberfläche eines anorganischen Substrates und
(B) anschließend Erhitzen des entstandenen beschichteten Gegenstandes auf eine Temperatur in dem Bereich von 100 bis 300°C, bis der erwünschte Grad der Härtung der Beschichtung erreicht ist.

10. Verfahren zur Herstellung eines beschichteten Gegenstandes, umfassend die Schritte:
(A) Aufbringen einer Beschichtung der Fluorelastomer-Zusammensetzung nach Anspruch 1 auf die Oberfläche eines anorganischen Substrates und
(B) anschließend Bestrahlen des enstandenen beschichteten Substrates mit einer Strahlung hinreichender Intensität, um eine Härtung der Fluorelastomer-Beschichtung zu bewirken.

## Revendications

1. Composition de revêtement d'élastomère fluoré, comprenant pour chaque 100 parties en poids d'élastomère fluoré:
(A) 2 à 50 parties en poids d'une base de Schiff préparée en faisant réagir un composé aminosilane ou polyaminosiloxane avec un aldéhyde ou une cétone; et
(B) 1 à 30 parties en poids d'un accepteur d'acide; et une quantité telle d'un solvant organique de façon à conférer à la composition une teneur en matières solides totales comprise entre 10 et 90% par rapport au poids total de la composition.

2. Composition de revêtement d'élastomère fluoré, selon la revendication 1, dans laquelle la composition comprend de plus un agent de vulcanisation de type amine.

3. Composition de revêtement d'élastomère fluoré, selon la revendication 2, dans laquelle l'agent de vulcanisation amine est présent dans la composition à raison de 0,5 à 10 parties en poids pour 100 parties en poids de l'élastomère fluoré.

4. Composition de revêtement d'élastomère fluoré, selon la revendication 2, dans laquelle la composition comprend de plus un accélérateur de vulcanisation de type organoonium.

5. Composition de revêtement d'élastomère fluoré, selon la revendication 1, dans laquelle la composition comprend de plus un polyol et un accélérateur de vulcanisation de type organoonium.

6. Composition de revêtement d'élastomère fluoré, selon la revendication 5, dans laquelle le polyol est présent dans la composition à raison de 0,5 à 10 parties pour 100 parties d'élastomère fluoré et le composé organoonium est présent dans la composition à raison de 0,5 à 10 parties pour 100 parties d'élastomère fluoré.

7. Composition de revêtement d'élastomère fluoré, selon la revendication 1, dans laquelle la composition comprend de plus 0,1 à 10 parties en poids d'agent de vulcanisation de type peroxyde pour 100 parties en poids d'élastomère fluoré et 1 à 20 parties en poids de co-agent pour 100 parties en poids d'élastomère fluoré.

8. Un article revêtu de la composition d'élastomère fluoré selon la revendication 1.

9. Procédé de production d'un article revêtu comprenant les étapes consistant:
(A) à appliquer un revêtement de la composition de revêtement d'élastomère fluoré selon la revendication 1 à la surface d'un substrat inorganique; et
(B) à chauffer ensuite l'article revêtu résultant à une température comprise entre 100 et 300°C jusqu'à ce à atteindre le degré voulu de durcissement du revêtement.

10. Procédé de production d'un article revêtu comprenant les étapes consistant:
(A) à appliquer un revêtement de la composition d'élastomère fluoré selon la revendication 1 à la surface d'un substrat inorganique; et
(B) à irradier ensuite le substrat revêtu résultant avec un rayonnement d'intensité suffisante pour effectuer un durcissement du revêtement d'élastomère fluoré.
